(19) Europäisches Patentamt / European Patent Office / Office européen des brevets

(11) **EP 3 612 831 B1**

(12) **FASCICULE DE BREVET EUROPEEN**

(45) Date de publication et mention
de la délivrance du brevet:
**28.07.2021 Bulletin 2021/30**

(21) Numéro de dépôt: **18712934.1**

(22) Date de dépôt: **16.02.2018**

(51) Int Cl.:
*G01N 29/22* (2006.01)   *G01N 29/26* (2006.01)
*G01N 29/44* (2006.01)   *G01N 29/30* (2006.01)
*C04B 40/00* (2006.01)   *G01N 29/032* (2006.01)

(86) Numéro de dépôt international:
**PCT/FR2018/000029**

(87) Numéro de publication internationale:
**WO 2018/150109 (23.08.2018 Gazette 2018/34)**

(54) **METHODE DE MESURE POUR LA DETERMINATION DES PROPRIETES MECANIQUES DE MILIEUX INITIALEMENT LIQUIDES OU MOUS ET DE LEURS EVOLUTIONS DANS LE TEMPS**

MESSVERFAHREN ZUR BESTIMMUNG MECHANISCHER EIGENSCHAFTEN VON ANFANGS FLÜSSIGEN ODER WEICHEN MEDIEN UND ÄNDERUNGEN DAVON IM LAUFE DER ZEIT

MEASURING METHOD FOR DETERMINING MECHANICAL PROPERTIES OF INITIALLY LIQUID OR SOFT MEDIA AND CHANGES THEREIN OVER TIME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.02.2017 FR 1770157**

(43) Date de publication de la demande:
**26.02.2020 Bulletin 2020/09**

(73) Titulaires:
• **LABOURET, Stéphane**
  **69100 Villeurbanne (FR)**
• **Frohly, Jacques**
  **59000 Lille (FR)**

(72) Inventeurs:
• **LABOURET, Stéphane**
  **69100 Villeurbanne (FR)**
• **Frohly, Jacques**
  **59000 Lille (FR)**

(56) Documents cités:
**JP-A- H10 227 775   US-A- 5 886 250**

• **JOHN S. POPOVICS ET AL: "Review of Ultrasonic Wave Reflection Applied to Early-Age Concrete and Cementitious Materials", JOURNAL OF NONDESTRUCTIVE EVALUATION., vol. 34, no. 1, 18 novembre 2014 (2014-11-18), XP055480726, US ISSN: 0195-9298, DOI: 10.1007/s10921-014-0267-3**
• **WANG X ET AL: "Ultrasonic measurement of viscoelastic shear modulus development in hydrating cement paste", ULTRASONICS, IPC SCIENCE AND TECHNOLOGY PRESS LTD. GUILDFORD, GB, vol. 50, no. 7, 1 juin 2010 (2010-06-01), pages 726-738, XP027044316, ISSN: 0041-624X [extrait le 2010-02-18]**
• **Lester W. Schmerr ET AL: "Introduction" In: "Fundamentals of Ultrasonic Phased Arrays", 1 janvier 2015 (2015-01-01), Springer International Publishing, Cham, XP055481057, ISSN: 0925-0042 ISBN: 978-3-319-07272-2 vol. 215, pages 1-15, DOI: 10.1007/978-3-319-07272-2_1, page 3, lignes 6-8; figure 1.3 page 6, alinéa 2; figure 1.7**
• **CAMARA V C ET AL: "Enhanced multiple ultrasonic shear reflection method for the determination of high frequency viscoelastic properties", ULTRASONICS, IPC SCIENCE AND TECHNOLOGY PRESS LTD. GUILDFORD, GB, vol. 50, no. 7, 1 juin 2010 (2010-06-01), pages 710-715, XP027044314, ISSN: 0041-624X [extrait le 2010-02-17]**

## Description

La présente invention concerne une méthode d'exploitation des données de mesure obtenues permettant de déterminer des valeurs caractéristiques des propriétés mécaniques d'un milieu initialement liquide ou suffisamment mou pour venir en contact avec une surface plane puis de suivre en temps réel leurs évolutions lors de changements d'état physico-chimique de ce milieu. Les paramètres obtenus sont les célérités de propagation des ondes acoustiques longitudinale et transversale dans le milieu, ainsi que la masse volumique. Ces 3 paramètres réunis sont reliés aux propriétés mécaniques du milieu et à son évolution, notamment par le module d'Young et le module de cisaillement.

Cela concerne par exemple le suivi de la prise des ciments et bétons, avant le décoffrage, et qui est à l'origine des travaux ayant conduit à l'invention [LAB 98].

L'invention s'applique à tous les milieux, initialement liquides ou mous, dont les caractéristiques mécaniques évoluent au cours du temps par exemple les colles, mousses, polymères, dépôts sédimentaires de matière, fromages, yaourts, fluides thixotropes. L'invention s'applique également à la mesure des propriétés mécaniques des milieux mous comme les tissus et revêtements, peaux, épidermes, l'élasticité des parois : vaisseaux, tissus, artères, muscles.

## État de l'art

Les méthodes existantes actuellement fournissent des informations partielles sur les propriétés mécaniques des milieux liquides ou mous. Par exemple, certaines méthodes déterminent une seule propriété mécanique : la pointe de Vicat détermine la dureté des ciments, les rhéomètres mesurent la contrainte de cisaillement et la vitesse de cisaillement pour obtenir la viscosité. Elles rencontrent en général des limitations lorsque le milieu passe de l'état liquide vers l'état solide. D'autre part le module d'Young n'est pas mesuré.

Les ondes acoustiques se prêtent bien à des mesures tant en milieux liquides que solides.

Une première classe de méthodes consiste à faire traverser les ondes acoustiques dans le milieu étudié entre un émetteur et un récepteur. Ces méthodes ne peuvent déterminer que les célérités des ondes. Cette solution est de plus limitée aux ondes longitudinales pour les liquides qui ne permettent pas la propagation des ondes transversales. Appliquées au suivi de la prise du ciment [CAN 90 SAY 93 GAR 95 BOU 95], les mesures en ondes transversales ne commencent qu'après la formation d'un réseau solide. Ces méthodes ne fournissent pas la masse volumique. Elles permettent par contre d'obtenir l'atténuation des ondes dans les milieux.

Une seconde classe de méthodes acoustiques pour la caractérisation des milieux matériels utilise des mesures basées sur l'étude des vibrations, parfois résonantes, d'un solide au contact avec le milieu étudié en ondes longitudinales [PRU 98, CRO 99] ou avec des ondes transversales dont les vibrations sont parallèles à la surface au contact du milieu étudié [NOM 82, TOZ 92, TES 93, OUL 06]. Dans ces méthodes, seules deux propriétés du milieu au maximum peuvent être appréhendées par l'étude de l'impédance électrique du transducteur qui émet l'onde : soit la viscosité et la masse volumique, soit le module de cisaillement et la masse volumique.

Il existe également plusieurs méthodes de mesure de la viscosité basées sur les variations de l'impédance électrique d'un transducteur, soit directement en contact avec le liquide, soit par l'intermédiaire d'un solide [MAS 47-1, MCS 52, BAR 61, GLO 68, MAS 47-2, MAS 49, MCS 67, DEB 97]. La déformation peut être soit une torsion pour un cylindre, soit un mouvement tangentiel pour une surface plane. Dans le cas d'une ligne à retard avec une interface plane, deux capteurs sont parfois nécessaires si la mesure est faite en incidence oblique. Dans ce cas, il s'agit d'ondes transversales pour lesquelles l'oscillation se fait dans le plan de l'interface, et qui ne provoque pas de conversion de mode d'onde (transversale-longitudinale) à la réflexion [BAR 61, RIC 87, HOU 91].

Une troisième classe de méthodes acoustiques est basée sur la mesure de coefficients de réflexion à l'interface entre un solide de référence et le milieu étudié. La réflexion peut être en incidence normale [SHA 00], avec la mesure du déphasage à la réflexion, d'une transversale dont la vibration est parallèle à l'interface.

Pour le suivi de la prise du ciment, la méthode dite du barreau consiste à mesurer la réflexion d'une onde longitudinale se propageant dans un barreau plongé dans le ciment. Elle est basée à la fois sur les réflexions des ondes sur l'extrémité du barreau en incidence normale et sur les parois latérales du barreau qui s'accompagnent de conversion de mode longitudinale-transversale des ondes réfléchies. Les résultats ne fournissent aucune valeur caractéristique des propriétés du milieu étudié, mais une évolution relative de l'amplitude du signal du signal acoustique recueilli [BEL 92]. Cette méthode a fait l'objet d'un brevet [PEL 83].

Greenwood *et al.* [GRE 98, GRE 99, GRE 00] proposent un concept de densitomètre ultrasonore destinés aux fluides. Typiquement, le densitomètre est constitué d'un solide massif comportant plusieurs surfaces planes parallèles ou non qui, à l'exception de l'interface entre le solide et le milieu étudié, sont équipées de couples de transducteurs ultrasonores émetteur et récepteur en vis-à-vis acoustiques qui permettent chacun la mesure d'un coefficient de réflexion sous un angle d'incidence déterminé, normal ou oblique. La mesure en incidence normale, lorsqu'elle est envisagée, est faite en onde longitudinale ou transversale. Les mesures sont faites avec des émissions d'ondes de courte durée. La masse volumique et une célérité d'onde dans le milieu sont obtenues à partir d'une expression analytique issue d'hypothèses simplificatrices. Comme l'indique le nom, leur dispositif est essentiellement tourné vers la mesure de la masse volumique, en particulier pour des liquides. Les auteurs remarquent, et revendiquent la possibilité de déterminer les célérités des ondes longitudinale et transversale ainsi que la masse volumique du milieu à partir de 3 mesures de coefficients de réflexion selon 3 d'angles d'incidences différents. Ils ne précisent toutefois pas la méthode pour accéder aux propriétés recherchées à partir de ces mesures. En fait, comme cela sera précisé plus loin, la mesure de 3 coefficients de réflexion distincts n'est pas suffisante pour déterminer ces 3 paramètres de manière univoque.

Toutes ces méthodes existantes, et particulièrement celles qui utilisent la mesure de coefficients de réflexion, s'appuient sur des hypothèses simplificatrices. L'utilisation d'hypothèses simplificatrices évite d'avoir à traiter les systèmes d'équations non linéaires décrivant ces réflexions avec, pour conséquence, de ne pas pouvoir déterminer les 3 paramètres : célérités des ondes longitudinale et transversale et masse volumique.

Par ailleurs la résolution de ces systèmes d'équations est difficile. En effet, en plus de la taille du système qui requiert un traitement numérique, elle conduit souvent à des solutions instables lorsque des valeurs théoriques sont remplacées par des valeurs expérimentales entachées d'une marge d'erreur.

Nous proposons, d'une part, un dispositif de mesure qui, grâce à l'utilisation d'une barrette multi-transducteurs, ne nécessite qu'un seul couple émetteur - récepteur permettant la mesure des coefficients de réflexion selon des angles d'incidence dont le choix n'est pas déterminé par la géométrie de la sonde, et d'autre part, une méthode originale de traitement des données expérimentales permettant de contourner les difficultés de résolution des systèmes d'équations en prenant en compte les incertitudes de mesure pour transformer ce système d'équations en un système d'inéquations.

## Description globale de l'invention.

Un procédé pour la détermination de valeurs de propriétés mécaniques d'un milieu étudié par ondes ultrasonores selon la revendication 1 est présenté. Les modes de réalisation préférés sont décrits dans les revendications dépendantes.

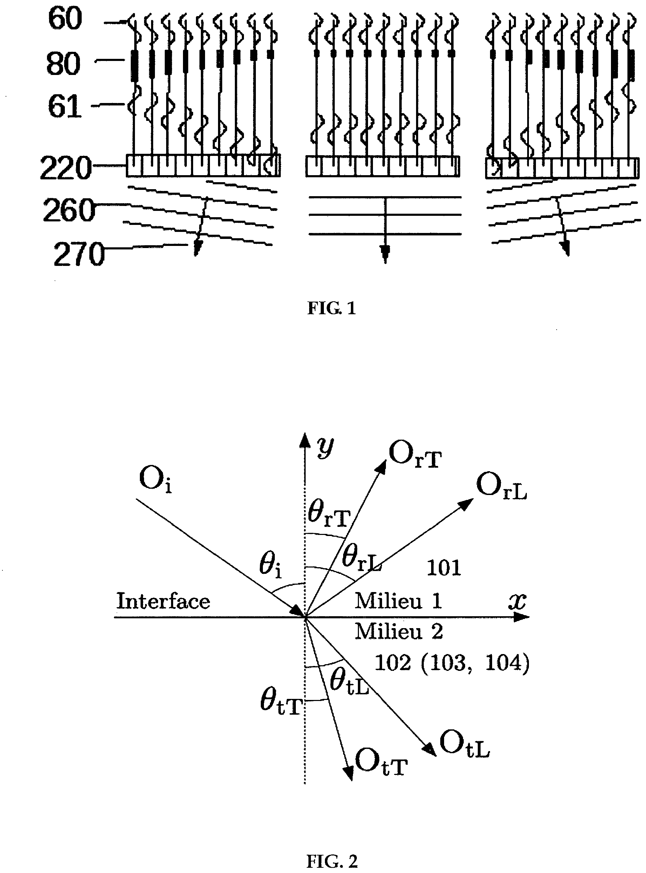

La présente invention repose sur un dispositif de barrettes multi-transducteurs planes (figure 1) qui permet, de réaliser la mesure de plusieurs coefficients de réflexion d'ondes acoustiques sous plusieurs incidences obliques, au niveau de l'interface plane entre un milieu solide de référence, dont les propriétés sont connues, et le milieu étudié dont les propriétés sont recherchées. Les coefficients de réflexion sont distincts en ce qu'ils sont mesurés dans des conditions qui diffèrent par au moins l'angle d'incidence de l'onde acoustique incidente ou la nature, longitudinale ou transversale, de l'onde acoustique incidente.

Les coefficients de réflexion mesurés contiennent les informations des célérités des ondes longitudinale et transversale et de la masse volumique recherchées. Ces coefficients de réflexion sont introduits dans le système complet d'équations qui décrit les interactions entre les ondes acoustiques et l'interface entre le milieu de référence et le milieu étudié. La résolution de ce système complet d'équations conduit aux propriétés recherchées qui sont les inconnues du système.

La résolution numérique de ce système d'équations par les méthodes classiques est possible mais aboutit à des solutions instables en raison des imprécisions expérimentales et le plus souvent elle conduit à des solutions divergentes qui ne sont pas exploitables. L'invention propose, outre le dispositif utilisant une barrette multi-transducteurs, une méthode originale de traitement des données permettant de contourner cette difficulté et d'obtenir, in fine, des solutions physiquement exploitables. Cette méthode consiste à associer à chaque mesure de coefficient de réflexion un intervalle d'incertitude fixé a priori et en relation avec les incertitudes expérimentales. Ce système d'équations est alors transformé en un système d'inéquations dont la résolution fournit des intervalles solutions qui contiennent les solutions recherchées, pour les célérités des ondes longitudinale et transversale et la masse volumique du milieu étudié.

## Description des figures.

La figure 1 présente le schéma de principe de l'utilisation des retards introduits dans les signaux électriques alimentant les transducteurs élémentaires d'une barrette multi-transducteurs pour faire varier la direction de l'onde émise.

La figure 2 présente la description de la réflexion d'une onde incidente longitudinale sur une interface plane entre 2 milieux et des ondes qui en sont issues.

La figure 3 montre un exemple illustrant graphiquement la structure en nappes que prennent les solutions du système d'équations décrivant une réflexion d'onde acoustique lorsque les célérités des ondes longitudinale et transversale ainsi que la masse volumique du milieu étudié (104) sont recherchées avec la connaissance d'un seul coefficient de réflexion ; intersections de ces nappes montrant la localisation des solutions multiples en utilisant 3 coefficients de réflexions distincts.

La figure 4 présente le dispositif classique d'un exemple de sonde destinée à la mesure d'un coefficient de réflexion d'une onde acoustique à l'interface plane entre 2 milieux, avec un dispositif d'émission et un dispositif de réception.

La figure 5 présente un exemple de réalisation de l'invention comprenant une barrette d'émission (220) et un transducteur unique de réception (221) tous deux couplés acoustiquement sur des surfaces non parallèles avec description graphique de la forme des retards produisant les incidences variables.

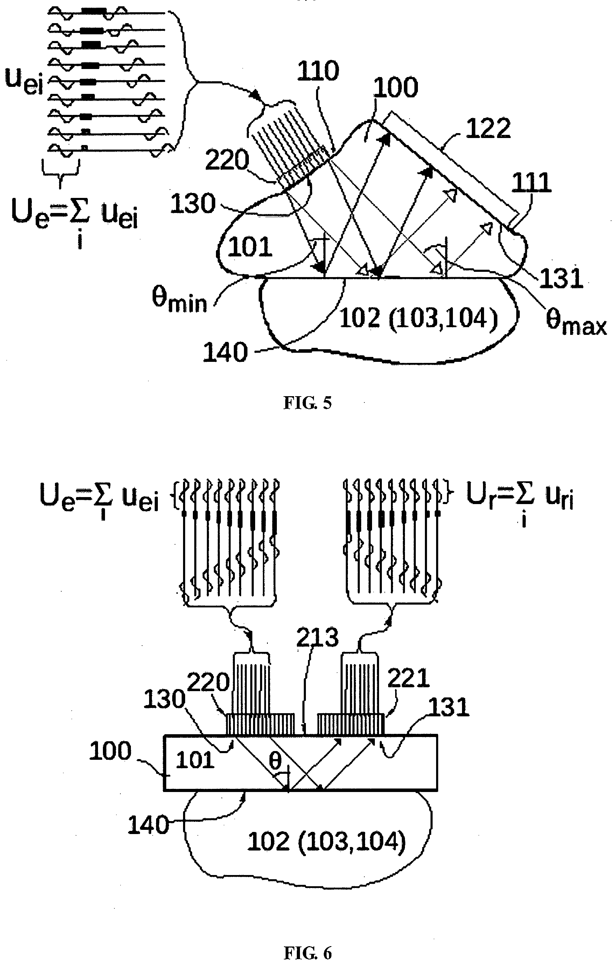

La figure 6 montre un exemple de réalisation de l'invention avec une barrette multi-transducteurs pour l'émission (220) et une barrette multi-transducteurs en réception (222) couplées à une surface plane parallèle à l'interface de réception ; la réflexion se fait toujours sur la même zone de l'interface réflexion par le choix du groupe de transducteurs élémentaires qui émet l'onde ; le choix du groupe de transducteurs élémentaires récepteur en découle ; description graphique des retards appliqués en réception pour compenser les retards d'orientation en émission (dans cet exemple, il n'y a pas de différence de temps de vol entre les différents rayons acoustiques).

La figure 7 montre un exemple de réalisation de l'invention dont la structure physique est similaire à celle de la figure 6 mais dont l'onde incidente est focalisée sur une zone réduite de l'interface de réflexion ; description graphique des retards additionnels pour les focalisations en émission et réception.

La figure 8 présente le schéma de principe de l'algorithme utilisée pour la résolution par ordinateur du système d'équations qui décrit les réflexions utilisées dans les mesures.

**Description détaillée de l'invention.**

**Présentation de la méthode pour déterminer les paramètres recherchés.**

Une onde incidente (Oi), qui à titre d'exemple est longitudinale sur la figure 2, frappe une interface plane entre 2 milieux. Les flèches représentent chacune un rayon d'une onde acoustique. La dite onde incidente produit une onde longitudinale en réflexion (OrL) et en transmission (OtL), et une onde transversale en réflexion (OrT) et en transmission (OtT). L'angle d'incidence de l'onde incidente, $\theta_i$, et les angles de réflexion $\theta_r$ et de transmission $\theta_t$ des ondes respectivement réfléchies et transmises sont reliés par les relations de Snell-Descartes. Les propriétés mécaniques du milieu 1, qui est le matériau solide de référence, sont supposées connues.

Des quatre ondes issues de l'interface, seul l'angle de réflexion de l'onde réfléchie qui est de même nature, longitudinale ou transversale, que l'onde incidente est toujours déterminé et est égale à $\theta_i$. Les 3 autres ondes ont des angles de réflexion ou de réfraction qui dépendent des propriétés du milieu 2 que l'on cherche à déterminer. C'est pourquoi le coefficient de réflexion r qui correspond à l'onde réfléchie de même nature, longitudinale ou transversale, que l'onde incidente est mesuré de préférence. Dans l'exemple de la figure 2, c'est le coefficient de réflexion $r_L$ de l'onde longitudinale.

La théorie modélise le comportement de la collision d'une onde sur une interface plane de 2 milieux de propriétés différentes en considérant les coefficients de réflexion et transmission mais aussi ces coefficients de conversion de mode en réflexion et transmission.

Le modèle générale se présente comme un système d'équations qui est obtenu en égalant les déplacements et les contraintes dans les 2 milieux à leur interface.

A titre d'exemple, pour une interface solide-solide et une onde incidente longitudinale, le modèle associé (Knott, 1889) s'écrit sous la forme matricielle $M_L \cdot X_L = Y_L$ avec :

$$M_L = \begin{bmatrix} \cos(\theta_{rL}) & -\sin(\theta_{rT}) & \cos(\theta_{tL}) & -\sin(\theta_{tT}) \\ -\sin(\theta_{rL}) & -\cos(\theta_{rT}) & \sin(\theta_{tL}) & \cos(\theta_{tT}) \\ -(\lambda_1 + 2\mu_1\cos^2(\theta_{rL})) & \mu_1\frac{c_{1L}}{c_{1T}}\sin(2\theta_{rT}) & \frac{c_{1L}}{c_{2L}}(\lambda_2 + 2\mu_2\cos^2(\theta_{tL})) & -\mu_2\frac{c_{1L}}{c_{2T}}\sin(2\theta_{tT}) \\ \mu_1\sin(2\theta_{rL}) & \mu_1\frac{c_{1L}}{c_{1T}}\cos(2\theta_{rT}) & \mu_2\frac{c_{1L}}{c_{2L}}\sin(2\theta_{tL}) & \mu_2\frac{c_{1L}}{c_{2T}}\cos(2\theta_{tT}) \end{bmatrix} ;$$

$$X_L = \begin{bmatrix} r_L \\ r_T \\ t_L \\ t_T \end{bmatrix} \; ; \; Y_L = \begin{bmatrix} \cos(\theta_i) \\ \sin(\theta_i) \\ \lambda_1 + 2\mu_1 \cos^2(\theta_i) \\ \mu_1 \sin(2\theta_i) \end{bmatrix} \; ;$$

où c désigne une célérité d'onde, l'indice 1 fait référence aux valeurs associées au matériau de référence qui supporte les transducteurs ; l'indice 2 au milieu étudié, l'indice L aux ondes longitudinales, l'indice T aux ondes transversales, r à la réflexion et t à la transmission. $\lambda$ est le premier coefficient de Lamé, $\mu$ le second coefficient de Lamé. Ils sont reliés aux célérités longitudinale et transversale des ondes et à la masse volumique dans chacun des milieux : $\mu = \rho c_T{}^2$ où $\rho$ est la masse volumique, $\lambda = \rho \, (c_L{}^2 - 2c_T{}^2)$ ; la connaissance de la célérité de l'onde transversale permet d'obtenir le module de cisaillement ($\mu$) pour un solide ; pour un liquide visqueux les contraintes de cisaillement ont pour origine la viscosité de cisaillement qui s'écrit $\eta = \rho \, c_T{}^2 \, / \, (2\omega)$ avec $\omega$ est la pulsation de l'onde et $\omega = 2\pi \, f$ avec f la fréquence de l'onde incidente. Le module d'Young du milieu étudié s'exprime en fonction des deux coefficients de Lamé $\lambda$ et $\mu$ par l'expression $(3\lambda+2\mu)\mu/(\lambda+\mu)$.

Le vecteur $X_L$ contient les coefficients de réflexion $r_L$ et de transmission $t_L$ de l'onde longitudinale et les coefficients de conversion de l'onde longitudinale en onde transversale en réflexion $r_T$ et en transmission $t_T$.

Lorsque la masse volumique et les célérités des ondes longitudinale et transversale sont connues pour les deux milieux de part et d'autre de l'interface, la résolution du système d'équations donne comme solution les 4 coefficients de réflexion du vecteur $X_L$.

Si, dans ce système, on ne connait pas les propriétés du milieu 2 qui sont recherchées et qu'on introduit le coefficient de réflexion $r_L$ mesuré, on constate qu'il n'y a pas assez d'équations pour déterminer les inconnues de manière univoque.

Le système de 4 équations qui décrit la réflexion dans laquelle a été mesuré un premier coefficient ru contient les 3 inconnues recherchées, les 2 célérités d'ondes et la masse volumique du milieu étudié, et 3 inconnues $r_T$, $t_L$ et $t_T$, qui ne sont pas déterminées expérimentalement comme c'est le cas pour $r_{L1}$. Il manque 2 équations pour pouvoir résoudre le système.

Si un deuxième coefficient de réflexion $r_{L2}$ est mesuré, dans des conditions de réflexion différente du premier, le système d'équations qui le décrit la réflexion dans ces conditions apporte 4 nouvelles équations mais seulement 3 inconnues, les coefficients de réflexion du vecteur X qui ne sont pas déterminés par la mesure. Il manque encore au moins une équation pour déterminer les inconnues recherchées.

Pour les mêmes raisons que pour la détermination du deuxième coefficient de réflexion, la mesure d'un troisième coefficient de réflexion obtenu dans des conditions de réflexion différentes des 2 premiers ajoute une équation de plus que d'inconnues, pour avoir au total autant d'équations que d'inconnues, 12 équations et 12 inconnues.

En vue de résoudre ce système de 12 équations et 12 inconnues, on examine d'abord le cas où on dispose de la mesure d'un coefficient de réflexion et du système de 4 équations qui décrit la réflexion dans laquelle est mesuré ce coefficient de réflexion. Les solutions du système de 4 équations dans lequel est intégrée la mesure expérimentale de ce coefficient de réflexion sont décrites par une surface dans l'espace des célérités et de la masse volumique du milieu 2.

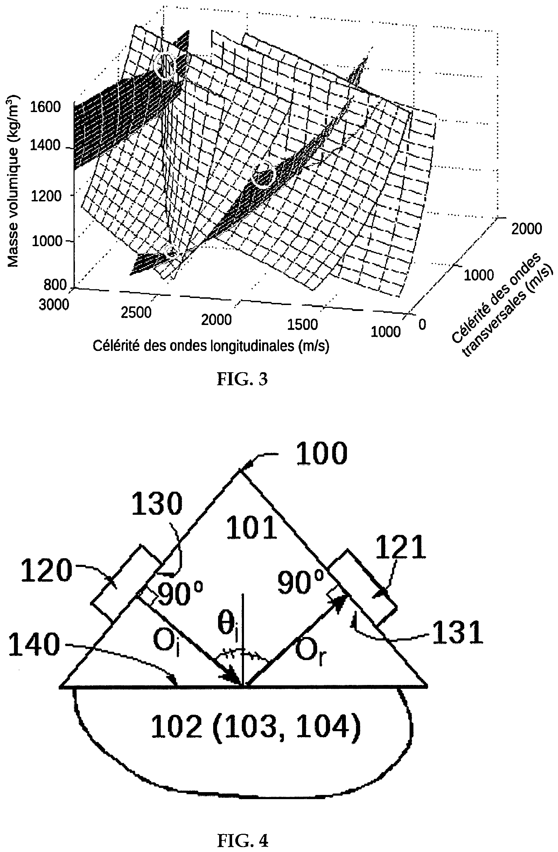

Ces solutions se répartissent sur 2 nappes de formes proches mais décalées, comme le montre la figure 3. Cette recherche des solutions renouvelée pour 3 coefficients de réflexion distincts associés à leurs systèmes d'équations respectifs donne en tout 6 nappes comme le représente la figure 3, avec des couleurs différentes (blanc, gris clair, gris sombre) pour les nappes correspondant aux différents angles d'incidences.

La figure 3 a été construite à partir de coefficients de réflexion déterminés par le calcul pour un milieu 2 donné, afin de simuler la mesure des coefficients de réflexion sur un même milieu. Les solutions du système complet d'équations (12 équations) sont les intersections de 3 nappes appartenant respectivement à la solution d'un des sous-systèmes associés à un coefficient de réflexion.

On constate, dans cet exemple, la multiplicité des solutions (entourées par les cercles figure 3), qui est due à la non-linéarité des équations du système. Plusieurs solutions peuvent exister, mais toutes ne seront pas nécessairement acceptables physiquement selon la nature du milieu étudié.

Dans le cas général, pour déterminer une solution unique pour les célérités des ondes longitudinale et transversale ainsi que la masse volumique dans le milieu 2, il faut mesurer au minimum 4 coefficients de réflexion en incidences obliques. Le dispositif de barrette multi-transducteurs proposé permet de faire varier ces angles d'incidence simplement et de façon multiple en jouant sur des retards entre les signaux électriques qui alimentent les différents transducteurs élémentaires de la barrette, retards qui sont commandés électroniquement. Il est ainsi possible d'obtenir plus de 4 mesures de coefficients de réflexion si nécessaire.

Le système d'équations intégrant des valeurs expérimentales contenant des imprécisions, sa résolution ne peut pas être directe car elle n'est pas stable vis-à-vis de ces imprécisions expérimentales et les solutions obtenues divergent. La méthode de résolution proposée ci-dessous permet de surmonter ces difficultés.

Graphiquement, les imprécisions des mesures rendent peu probables que 3 nappes se coupent en 1 seul point. Il faut donner à ces nappes une épaisseur de manière à ce qu'elles se croisent sur des volumes afin de compenser les incertitudes expérimentales. Pour cela, on introduit dans la résolution du système d'équations une incertitude +/- $\delta_{r_L}$, estimée expérimentalement ou non, sur les mesures des coefficients de réflexion afin de former des intervalles de mesure $[r_L - \delta r_L, r_L + \delta r_L]$. A partir de ces intervalles, le système d'équations est transformé en un système d'inéquations, avec pour solution des intervalles solutions pour les célérités et la masse volumique.

Ces intervalles solutions sont cherchés numériquement. Les valeurs du coefficient de réflexion sont calculées théoriquement dans les conditions de mesure du coefficient expérimental, en fonction de la masse volumique et des célérités des ondes, aux nœuds d'un quadrillage dans l'espace des valeurs possibles de ces trois grandeurs pour le milieu étudié. Ensuite, ne sont conservés comme solutions, que les nœuds dont le coefficient de réflexion calculé se trouve dans l'intervalle $[r_L - \delta r_L, r_L + \delta r_L]$ ; les coordonnées de ces nœuds appartiennent à la solution. L'opération est menée pour chaque coefficient de réflexion mesuré. L'algorithme de la méthode d'exploitation des mesures est décrit précisément plus loin.

La méthode fonctionne avec la mesure de coefficients de réflexion pour des ondes incidentes longitudinales, mais elle est également valable pour des coefficients de réflexions pour des ondes transversales dont les vibrations se font dans un plan normal à l'interface. Pour une interface solide-solide, le système d'équations pour ce type d'onde transversale s'écrit sous forme matricielle : $M_T . X_T = Y_T$ avec : $r_T$ et $t_T$ représentant respectivement les coefficients de réflexion et de transmission de l'onde transversale ; $r_L$ et $t_L$ représentent respectivement les coefficients de conversion de l'onde transversale en onde longitudinale respectivement en réflexion et en transmission.

$$M_T = \begin{bmatrix} \cos(\psi_{rL}) & -\sin(\psi_{rT}) & \cos(\psi_{tL}) & -\sin(\psi_{tT}) \\ -\sin(\psi_{rL}) & -\cos(\psi_{rT}) & \sin(\psi_{tL}) & \cos(\psi_{tT}) \\ -\frac{c_{1T}}{c_{1L}}(\lambda_1 + \mu_1\cos^2(\psi_{rL})) & \mu_1\sin(2\psi_{rT}) & \frac{c_{1T}}{c_{2L}}(\lambda_2 + 2\mu_2\cos^2(\psi_{tL})) & -\mu_2\frac{c_{1T}}{c_{2T}}\sin(2\psi_{tT}) \\ \mu_1\frac{c_{1T}}{c_{1L}}\sin(2\psi_{rL}) & \mu_1\cos(2\psi_{rT}) & \mu_2\frac{c_{1T}}{c_{2L}}\sin(2\psi_{tL}) & \frac{c_{1T}}{c_{2T}}\cos(2\psi_{tT}) \end{bmatrix} ;$$

$$X_T = \begin{bmatrix} r_L \\ r_T \\ t_L \\ t_T \end{bmatrix} ; Y_T = \begin{bmatrix} -\sin(\psi_i) \\ \cos(\psi_i) \\ -\mu_1\sin(2\psi_i) \\ \mu_1\cos(2\psi_i) \end{bmatrix} ;$$

La méthode peut être également mise en œuvre avec seulement des ondes longitudinales ou seulement des ondes transversales ou encore avec une combinaison de ces 2 types d'ondes.

La méthode est utilisable lorsque le milieu utilisé peut être considéré comme un solide, mais aussi lorsque le milieu utilisé est un liquide, et lors de la transition d'un solide à un liquide.

Le procédé de résolution présenté ici avec 3 coefficients de réflexion distincts est extensible sans difficulté à coefficients de réflexions supplémentaires. D'après les résultats présentés à la figure 3, il est attendu qu'un quatrième coefficient de réflexion distinct soit suffisant pour déterminer un seul intervalle solution pour chacune des propriétés recherchées. Un cinquième coefficient de réflexion pourra toujours être utilisé si l'on souhaite améliorer la précision des résultats.

Avec la mesure de 3 coefficients de réflexions distincts, il est attendu plusieurs intervalles solutions pour chacune des 3 propriétés recherchées. Si l'une de ces 3 propriétés a priori recherchées est déjà connue, alors il est attendu qu'un seul intervalle solution sera déterminé pour chacune des 2 autres propriétés.

Le procédé de résolution peut également être utilisé avec la mesure de seulement 2 coefficients de réflexion distincts à condition de connaître déjà l'une des 3 propriétés a priori recherchées ; dans ce cas, il est attendu plusieurs intervalles solutions pour chacune des 2 autres propriétés. La mesure de seulement 2 coefficients de réflexion avec la connaissance d'une des propriétés est utilisable par exemple pour le suivi de la prise du ciment.

Description détaillée de l'algorithme associé à la méthode de résolution.

L'exploitation des mesures de plusieurs coefficients de réflexion associées à leurs incertitudes de mesure, est réalisée numériquement selon les étapes suivantes :
Un nombre n de coefficients de réflexion distincts $r_1$, $r_2$ ..., $r_i$ ,..., $r_n$ ont été mesurés sur l'interface plane entre un matériau solide et le milieu étudié en utilisant un des dispositifs décrits plus loin (figure 3) qui permet de connaître le rapport de l'amplitude de l'onde réfléchie (Or) sur l'amplitude de l'onde incidente (Oi) selon des conditions de mesure. Celles-ci sont caractérisées par :

- l'angle d'incidence théta (θ) de l'onde
- le type d'onde (longitudinale ou transversale).

Ces différentes conditions de mesure, qui rendent les coefficients de réflexion distincts, sont étiquetées $m_1$, $m_2$ ... $m_i$... $m_n$, l'indice i correspondant à celui du coefficient de réflexion mesuré $r_i$.
Les conditions de mesures sont connues.
Dans un premier temps les valeurs minimales (indice "min") et maximales (indice "max") des intervalles dans lesquels sont recherchées grandeurs c2L, c2T et ρ2 du milieu étudié (milieu 2) sont choisies/fixées.
En plus des bornes de ces intervalles, N-2 valeurs sont choisies dans ces intervalles, qui peuvent être uniformément réparties sur ces intervalles ; ce nombre N n'est pas nécessairement le même pour les 3 grandeurs : Nc2L, Nc2T, Nρ. On forme ainsi 3 ensembles de valeurs :

c2L,p avec p appartient à $\{1,2,..,p,..,N_{c2L}-1,N_{c2L}\}$ où $c_{2L},1=c_{2Lmin}$ et $c_{2L,Nc2L}=c_{2Lmax}$;
c2T,q avec q appartient à $\{1,2,.., q,..,N_{c2T}-1,N_{c2T}\}$, où $c_{2T,1}=c_{2Tmin}$ et $C_{2T,Nc2T} =c_{2Tmax}$ ;
pk avec k appartient à $\{1,2,...k ,...,N_{\rho}-1,N_{\rho}\}$ où $\rho_1 = \rho_{min}$ et $\rho_{Nr}= \rho_{max}$ ;

Maintenant, à l'aide des systèmes d'équations décrivant le comportement d'une onde d'incidence oblique rencontrant une interface plane entre 2 milieux, on calcule pour chaque condition de réflexion utilisée expérimentalement les coefficients de réflexions pour toutes les combinaisons possibles $(c_{2L,p}, c_{2T,q}, \rho_k)$ et ils sont regroupés dans n tenseurs $R_{pqk}$ $(m_n)$ de dimension $N_{c2L}$ x $N_{c2T}$ x $N_{\rho}$. Ces tenseurs sont conservés en mémoire.
Une fois connues les valeurs expérimentales $r_n$ des coefficients de réflexion selon les différentes conditions de réflexion, il faut encore estimer/choisir l'amplitude des incertitudes $\delta r_n$ qui peuvent être différents.
Un tenseur Res de même dimension que les $R_{pqk}$ $(m_n)$ est également défini avec tous ses coefficients ayant la valeur booléenne 1 (vrai).
La suite de la résolution consiste à tester chaque coefficient de réflexion contenu dans les coefficients de $R_{pqk}$ $(m_1)$ pour savoir si sa valeur est comprise dans l'intervalle d'incertitude de la mesure $[r_1 - \delta r_1 ; r_1 + \delta r_1]$.
Cela se fait avec la condition logique :

$$((Res_{pqk}= 1) \ \& \ (R_{pqk}(m_1) > r_1 - \delta r_1) \ \& \ (R_{pqk}(m_1) < r_1 + \delta r_1))$$

et l'attribution de la valeur booléenne 1 (vrai) aux coefficients de Res qui vérifient cette condition et et la valeur booléenne 0 (faux) aux coefficients de Res qui ne vérifient pas cette condition.
Avec le tenseur Res ainsi obtenu, le test est recommencé avec le tenseur $R_{pqk}$ $(m_2)$ et l'intervalle d'incertitude $[r_2 - \delta r_2 \ r_2 + \delta r_2]$.

$$((Res_{pqk}= 1) \ \& \ (R_{pqk}(m_2) > r_2 - \delta r_2) \ \& \ (R_{pqk}(m_2) < r_2 + \delta r_2))$$

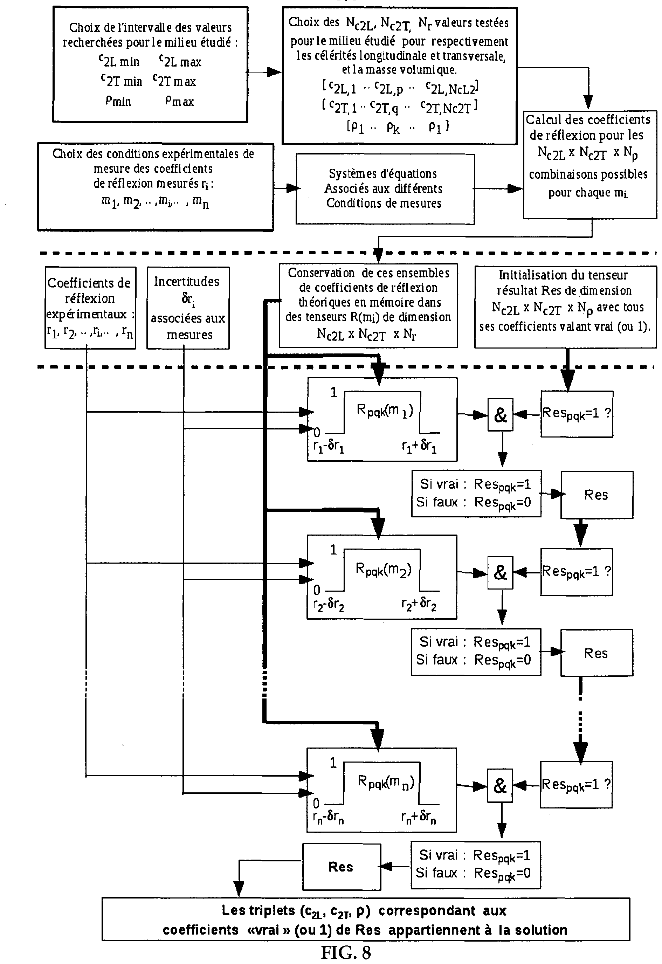

La première condition, $(Res_{pqk}=1)$, sert à maintenir à la valeur booléenne 0 (faux) les coefficients qui n'ont pas vérifié le ou les tests précédents.
Le test est fait autant de fois qu'il y a de mesures et successivement pour chacune des n mesures. A la fin, les solutions recherchées correspondent aux triplets de valeurs $(c_{2L,p}, c_{2T,q}, \rho_k)$ dont les coefficients sont 1 dans le tenseurs Res.
La méthode peut être étendue dans le cas des systèmes d'équations complexes avec des tenseurs d'ordre plus élevés ou encore au cas du calcul du coefficient de conversion en réflexion.
Les nombres $N_{c2L}$, $N_{c2T}$, $N_{\rho}$ et les valeurs des incertitudes utilisées $\delta r_n$ doivent être suffisamment grandes pour trouver des solutions.
Cet algorithme est décrit dans le schéma de la figure 8.

**Description d'une sonde pour la mesure de plusieurs coefficients de réflexion en incidences obliques.**

Un exemple de réalisation classique d'un dispositif pour mesurer un coefficient de réflexion d'une onde acoustique sous incidence oblique est rappelé figure 4. Un solide de référence (100), fait dans un matériau solide de référence (101) présente une surface plane (110), dite surface d'émission, qui est couplée acoustiquement sur une certaine aire (130), dite aire d'émission, de la surface d'émission, par collage ou soudage ou par l'intermédiaire d'un milieu de couplage, à un dispositif électro-mécanique (120), dit dispositif d'émission. Le dispositif d'émission produit une vibration qui induit dans le solide de référence (100) une onde acoustique incidente (Oi), longitudinale ou transversale, dont l'amplitude est proportionnelle à l'amplitude Ue liée à la tension du signal électrique qui alimente les bornes du dispositif d'émission. L'onde incidente se propageant selon une incidence normale à la surface d'émission, l'angle d'incidence sur l'interface de réflexion est déterminé par l'orientation relative de la surface de réception et de l'interface de réflexion.

L'onde incidente percute en incidence oblique, selon un angle d'incidence théta ($\theta$) une surface plane de la sonde, dite interface de réflexion (140), en contact avec un milieu de réflexion (102) qui peut être le milieu étudié (104) ou un milieu d'étalonnage du dispositif (103) dont les propriétés sont connues.

L'onde réfléchie de même type, longitudinale ou transversale, que l'onde incidente, atteint une surface plane (111), dite surface de réception. La dite surface de réception est couplée acoustiquement à un second dispositif électro-mécanique, dit dispositif de réception (121), sur une aire, dite aire de réception (131). Ledit dispositif de réception fournit à ses bornes un signal électrique dont l'amplitude Ur est proportionnelle à l'amplitude de l'onde réfléchie (Or).

Le coefficient de réflexion dont on cherche la mesure est défini par le rapport de l'amplitude de l'onde réfléchie sur l'amplitude de l'onde incidente.

L'atténuation mesurée par le rapport Ur/Ue n'est pas une mesure du coefficient de réflexion car ce rapport résulte également de différentes dissipations énergétiques et des rendements non idéaux des dispositifs d'émission et de réception, cet ensemble constituant l'atténuation propre de la sonde, Asonde. Un étalonnage est nécessaire pour déterminer cette atténuation propre.

Ledit étalonnage consiste à mesurer le rapport Ur/Ue en présence d'un milieu d'étalonnage (103) dont les propriétés sont connues, rapport qui est divisé par le coefficient de réflexion rLth calculé théoriquement avec le système d'équations décrivant la réflexion de l'onde et utilisant les propriétés connues des 2 milieux , soit finalement : A sonde = $(Ur/Ue)/r_{Lth}$.

En présence du milieu étudié (104), le coefficient de réflexion $r_L$ est obtenu en divisant le rapport des tensions Ur/Ue par Asonde., soit : $r_L$ = (Ur/Ue)/Asonde.

**Description de réalisations de l'invention**

Le dispositif physique caractérisant l'invention proposée est l'utilisation d'une ou de plusieurs barrettes multi-transducteurs comme dispositif d'émission, dite barrette d'émission, et éventuellement aussi comme dispositif de réception, dite barrette de réception. Une barrette multi-transducteurs permet l'émission d'une onde dans différentes directions avec un seul dispositif d'émission. Une barrette multi-transducteurs est constituée de plusieurs transducteurs élémentaires alignés. En décalant dans le temps, au moyen de lignes à retard ou par une commande électronique, le signal électrique envoyé aux différents transducteurs élémentaires de la barrette, il est possible de réaliser à partir d'un dispositif plan toutes les fonctions de l'optique géométrique : inclinaison de faisceaux, focalisation et focalisation poursuite.

A titre d'exemple, la figure 1 illustre la fonction prisme avec l'émission d'une onde plane, dont sont représentés les plans d'onde (80) et la direction de propagation (260), dans 3 directions avec une même barrette multi-transducteurs (270) alimentée électriquement par des signaux (61) qui à partir de signaux synchrones (60) ont été décalées dans le temps par des retards qui sont proportionnels à la longueur des barres noires (80) représentées.

En utilisant une telle barrette multi-transducteurs comme dispositif d'émission, il est possible de mesurer des coefficients de réflexions selon plusieurs angles d'incidence avec un seul dispositif d'émission et un seul dispositif de réception. Le dispositif de réception (122), qui peut être un transducteur piézo ou ferro électrique ou une barrette multi-transducteurs (221) doit être assez être large pour recevoir l'onde réfléchie quelque soit l'angle d'incidence utilisé. Une réalisation de ce type de sonde est présentée figure 5, qui suit la géométrie des sondes classiques présenté figure 4, dont les surfaces d'émission, de réception et l'interface de réflexion sont des plans non parallèles. Avec des barrettes multi-transducteurs en émission, l'angle d'incidence ne dépend plus seulement de l'angle entre la surface d'émission et l'interface de réflexion. Il est alors possible de concevoir un dispositif dans lequel les surfaces d'émissions et de réceptions sont communes (213) et parallèles à l'interface de réflexion. La figure 6 est un exemple de réalisation d'une telle sonde, qui utilise, dans ce cas, une barrette multi-transducteurs comme dispositif de réception, dite barrette de réception (221).

Afin de mesurer les coefficients de réflexion sur le même échantillon de matière du milieu étudié quelque soit l'angle utilisé, c'est-à-dire sur la même zone de l'interface de réflexion, l'émission de l'onde est produite avec un sous ensemble de transducteurs élémentaires consécutifs de la barrette, dit groupe d'émission, qui change selon l'angle d'incidence. Une telle émission de l'onde incidente par un dit groupe d'émission est représentée figure 6.

Dans un tel cas, il est envisageable d'utiliser comme dispositif de réception, soit un seul transducteur, soit une barrette multi-transducteurs, dite barrette de réception, dont un sous-groupe de transducteurs élémentaires consécutifs, dit groupe de réception, placé sur la trajectoire de l'onde réfléchie, est utilisé pour mesurer l'amplitude de l'onde réfléchie. Cette manière de faire est illustrée figure 6.

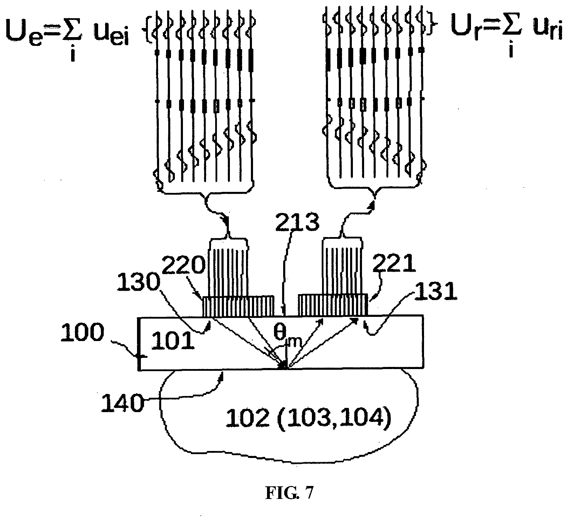

Une autre réalisation possible de l'invention, présentée figure 7, consiste à utiliser la barrette d'émission pour, en plus de diriger le faisceau acoustique, focaliser le faisceau acoustique sur une aire réduite de l'interface de réception, dite zone focale de réflexion, de position déterminée. L'angle d'incidence théta indice m ($\theta_m$) est alors pris comme la moyenne des angles d'incidence des différents rayons du faisceau focalisé de l'onde incidente. La réflexion de l'onde focalisée sur l'interface de réflexion doit intervenir dans le zone focale de l'onde incidente focalisée qui est le lieu de reconstitution d'une onde plane dont l'angle incidence correspond à l'angle d'incidence théta indice m ($\theta_m$).

Pour les barrettes multi-transducteurs utilisées comme dispositif d'émission, l'amplitude Ue de la tension proportionnelle à l'amplitude de l'onde incidente peut être prise comme l'amplitude de la somme des signaux électriques appliqués aux transducteurs de la barrette, ou du groupe d'émission, lorsqu'ils sont en phase, avant qu'ils ne soient décalés temporellement pour diriger l'onde incidente.

Pour les barrettes multi-transducteurs utilisées comme dispositif de réception, le signal électrique dont l'amplitude Ur est proportionnelle à l'amplitude de l'onde réfléchie peut être pris comme la somme des tensions des transducteurs élémentaires de la barrette, ou du groupe de réception, une fois qu'ils ont été tous remis en phase. Leur remise en phase se fait par l'introduction de retards qui compensent d'une part les retards temporels introduits dans les signaux qui alimentent les transducteurs élémentaires de la barrette d'émission pour diriger l'onde incidente, et le cas échéant pour la focaliser, et d'autre part les décalages temporels qui découlent des différences de temps de vol entre les rayons acoustiques qui atteignent les différents transducteurs élémentaires de la barrette réceptrice, ou du groupe de réception.

## Références

BAR 61 A.J Barlow, G. Harrison, J. Richter, H. Seguin, J. Lamb : Electrical method for the viscoelastic behaviour of liquid under cyclic shearing stress : Lab. Pract. , 10 (1961) 786-801.

BEL 92 L. Belkheiri : Etude de l'évolution des caractéristiques ultrasonores dans les matériaux en cours de solidification. Thèse de doctorat Université Denis Diderot Paris 7, France (1992).

BOU 95 A. Boumiz : Etude comparée des évolutions mécaniques et chimiques des pâtes de ciment et mortiers à très jeunes âges. Thèse de doctorat Université Denis Diderot Paris 7, France (1995)

CAN 90 G. Cannard G. Orcel J. Prost : Le suivi de la prise des ciments par ultrasons ; Bull. Liaison. Labo. P. et Ch. 168 (1990) 89-95.

CRO 99 B. Cros, J.Y. Ferrandis : Characterization of the cement setting by acoustic near field ; Sensors and actuators B 60 (1999) 200-207

DEB 97 Y. Deblock : Caractérisation ultrasonore haute fréquence des propriétés viscoélastiques de milieux liquides ; Thèse de Doctorat, université de Valenciennes, France (1997).

FIN 83 M. Fink: L'imagerie ultrasonore, Rev. Phys. Appl. (Paris) 18, 527-556 <DOI:10.1051/rphysap:01983001809052700> (1983)

FRO 83 J. Frohly : Etude de la propagation des ondes ultrasonores dans les milieux hétérogènes et applications de l'imagerie en mode B au contrôle non destructif. Thèse de Doctorat d'Etat, 29 avril 1983, Université de Valenciennes.

GAR 95 V. Garnier, G. Corneloup, J.M. Sprauel J.C. Perfumo : Setting time study of roller compacted concrete by spectral analysis of transmitted ultrasonics signals ; NDT&E international 28 (1995) 15-22.

GLO 68: G. M. Glover G. Hall, A.J. Matheson J.L. Stretton : A magnetostrictive instrument for measuring the viscoelacticity of liquids in the frequency range 20-100 kHz : J. Phys. E 1 (1968) 383-388.

GRE 98 M. S. Greenwood, Ultrasonic fluid densitometry and densitometer, brevet US5 708 191A, 13 jan 1998.

GRE 99 M. S. Greenwood, R.V. Harris, Pitch-catch only ultrasonic fluid densitometer, brevet US 5 886 250, 23 mars 1999.

GRE 00 : M. S. Greenwood, Ultrasonic fluid densitometer having liquid/wedge and gas/wedge interfaces, brevet US 6 083 181, 4 juil 2000.

HOU 91 M. Hoummady : Onde élastiques transverses horizontales émises par des transducteurs interdigités déposés sur des plaques minces de quartz. Application aux capteurs de viscosité et aux détecteurs de gaz. Thèse de doctorat de 3ème cycle, université de Besançon, France (1991).

LAB 98 S. Labouret, J. Frohly, Ultrasound method for monitoring the rheologic properties of cement, Ultrasonics

36 (1-5) 205-208 (1998).

KNO 89 G.G. Knott : Reflexion and refraction of elastic waves with sismological application ; Phil. Magazine S5, vol.48, n°290 (1889) 64-97.

NOM 82 T. Nomura, M. Okuhara : Frequency shifts of piezoelectric quartz crystals immersed in organic liquids ; Anal. Chim. Acta 142 (1982) 281-284.

MAS 47-1 W.P. Mason : Measurement of the viscosity and shear elasticity by means of a torsionaly vibrating crystal ; Trans. Am. Soc. Mech. Eng. 69 (1947) 359.

MAS 47-2 W.P. Mason et H.J. McSkimin : atténuation and scattering of hight frequency sound waves in metals and glasses ; J. Acoust. Soc. Am., 19 (1947) 464-473

MAS 49 W.P Mason, W.O. Baker H.J. McSkimin et J.H. Heiss : Measurement of shear elasticity of liquids at ultrasonics frequencies : Phys. Rev. 75 (1949) 936-946

MCS 52 H.J McSkimin : Measurement of dynamic shear viscosity and stiffness of viscous liquids by means of traveling torsional waves ; J. Acoust. Soc. Am. 24 (1952) 355-365.

OUL 06 Ould Ehssein, C. and Serfaty, S. and Griesmar, P. and Le Huerou, J.Y. and Martinez, L. and Caplain, E. and Wilkie-Chancelier, N. and Gindre, M. and Gouedard, G. and Figuiere, P. : Kinetic study of silica gels by a new rheological ultrasonic investigation ; Ultrasonics 44 (2006) 881-885

PEL 83 Pelletier, Moreau, Bocquet (inventeur) : Sonde à relais, brevet BF 8305910-12 avril 1983

PRU 98 C. Prugne, J. Van Est, B. Cros, G. Lévêque et J. Attal : Measurement of the viscosity of liquids by near field acoustics ; Meas. Sci. Technol. 9 (1998) 1894-1898

RIC 87 A. RICCO S.J. LARTIN : Acoustic wave viscosity sensor ; Appl. Phys. Letter. 50 (1987) 1474-1476.

SAY 93 C.M. Sayers R.L Grenfell : Ultrasonic propagation through hydrating cement ; Ultrasonics 31 (1993) 147-153.

SHA 00 V.V. Shah, K. Balasubranaiam : Measuring newtonian viscosity from the phase of reflected ultrasonic shear waves ; Ultrasonics 38 (2000) 922-927.

TES 93 L. Tessier : Immunodétection par résonateur à quartz, Thèse de doctorat, Université de Tours, France (1993)

TOZ92 K.Tozaki, M Kimura, N. Komatsu, S. Itou : An improved method to determine complex acoustic impedance using a piezoelectric resonator : Jpn. J Appl. Phys. 31 (1992) 2592-2597.

## Revendications

1. Procédé de détermination des valeurs de propriétés mécaniques d'un milieu étudié (102) initialement liquide ou mou, parmi lesquelles le module d'Young E, le module de cisaillement $\mu$ dans le cas d'un solide ou la viscosité $\eta$ dans le cas d'un fluide et la masse volumique p, qui comprend les étapes successives suivantes :

   a) les mesures de n coefficients de réflexion distincts $r_i$, i étant un entier de 1 à n, chacun de ces n coefficients de réflexion distincts étant mesuré par la réflexion d'une onde mécanique sur une interface plane entre un matériau solide de référence (101) dont les propriétés mécaniques sont connues et ledit milieu étudié sous un angle d'incidence connu $\theta_i$ ;

   b) les estimations des n incertitudes $\delta r_i$ associées respectivement aux n valeurs des mesures des coefficients de réflexion distincts $r_i$ de l'étape a), dont le choix prend en compte en particulier les erreurs liées aux mesures elles-mêmes, dans l'objectif de trouver au moins une valeur solution pour les propriétés mécaniques recherchées dudit milieu étudié ;

   c) une méthode d'exploitation et de traitement coordonné, au moyen d'un ordinateur, des n coefficients de réflexion $r_i$ mesurés à l'étape a) associés à leurs intervalles d'incertitude $[r_i - \delta r_i ; r_i + \delta r_i]$ respectifs estimés à l'étape b) pour obtenir les propriétés mécaniques recherchées dudit milieu étudié, et qui comprend les étapes successives suivantes :

   c1) le choix et la mise en mémoire de $N_{C2L}$ valeurs distinctes $c_{2L,p}$ parmi lesquelles est recherchée la célérité de l'onde longitudinale dans ledit milieu étudié, identifiées par l'indice p, p étant un entier compris entre 1 et $N_{C2L}$,
   le choix et la mise en mémoire de $N_{C2T}$ valeurs distinctes $C_{2T,q}$ parmi lesquelles est recherchée la célérité de l'onde transversale dans ledit milieu étudié, identifiées par l'indice q, q étant un entier compris entre 1 et $N_{C2T}$,
   le choix et la mise en mémoire de $N_\rho$ valeurs distinctes $\rho_{2,k}$ parmi lesquelles est recherchée la masse volumique dudit milieu étudié, identifiées par l'indice k, k étant un entier compris entre 1 et $N_\rho$;
   c2) la construction et la mise en mémoire d'un tenseur Res qui, dans le cas d'espèce, est d'ordre 3, avec pour dimensions les valeurs $N_{C2L}$, $N_{C2T}$ et $N_\rho$ choisies à l'étape c1) et dont tous les coefficients $Res_{pqk}$ ont la valeur booléenne 1 ;

c3) le calcul et la mise en mémoire de n tenseurs $R_{pqk}(m_i)$ de mêmes dimensions que le tenseur Res, $m_i$ désignant les conditions de réflexion utilisées pour la mesure du coefficient de réflexion $r_i$ associé, c'est-à-dire : les célérités des ondes longitudinale et transversale dans ledit matériau solide de référence, la masse volumique dudit matériau solide de référence, l'angle d'incidence et la nature longitudinale ou transversale de l'onde incidente utilisée ; chaque tenseur $R_{pqk}(m_i)$ est construit en assignant à chacun de ses coefficients d'indice (p,q,k) la valeur calculée pour le coefficient de réflexion $r_i$ de l'onde incidente par la résolution numérique du système d'équations qui décrit le comportement d'une onde rencontrant, sous incidence oblique, une interface plane entre ledit matériau solide de référence et ledit milieu étudié ; cette résolution est menée en utilisant les valeurs qui correspondent aux conditions de réflexion $m_i$ et aux valeurs $c_{2L,p}$, $c_{2T,q}$, $\rho_{2,k}$ choisies à l'étape c1) ;

c4) la mise à la valeur booléenne zéro de chaque coefficient $Res_{pqk}$ du tenseur Res si un des coefficients d'indice (p,q,k) des tenseurs $R_{pqk}(m_i)$ ne vérifie pas l'une des relations : $r_i - \delta r_i \leq R_{pqk}(m_i) \leq r_i + \delta r_i$, pour i compris entre 1 et n ;

c5) dans le cas où au moins un coefficient du tenseur Res a la valeur booléenne 1, les triplets de valeurs $(c_{2L,p}, c_{2T,p}, \rho_{2k})$ pour lesquelles $Res_{pqk}=1$ sont respectivement les valeurs des célérités des ondes longitudinale et transversale dans le milieu étudié et la masse volumique du milieu étudié qui sont utilisées ensemble pour calculer les valeurs des propriétés mécaniques recherchées du milieu étudié : la viscosité $\eta$ dans le cas d'un milieu étudié liquide par la relation $\eta = \rho \, c_T^2/(2\omega)$ avec $\omega$ la pulsation de l'onde, le module de cisaillement $\mu$ dans le cas d'un milieu étudié solide par la relation $\mu = \rho c_T^2$, le premier coefficient de Lamé $\lambda$ par la relation $\lambda = \rho(c_L^2 - 2c_T^2)$ et le module d'Young E par la relation $E = \mu \, (3\lambda + 2\mu) / (\lambda + \mu)$ ;

c6) dans le cas où aucun coefficient du tenseur Res n'a la valeur booléenne 1, les valeurs des nombres $N_{C2L}$, $N_{C2T}$ et $N_\rho$ et les valeurs des incertitudes $\delta r_i$ doivent être prises assez grandes pour obtenir les solutions recherchées.

2. Procédé selon la revendication 1) **caractérisé en ce que** les coefficients de réflexion distincts $r_i$ sont mesurés chacun dans des conditions de réflexion $m_i$ qui diffèrent des conditions de réflexion des autres coefficients de réflexion au moins, ou dudit angle d'incidence $\theta_i$, ou de la nature, longitudinale ou transversale, de l'onde acoustique incidente.

3. Procédé selon la revendication 1) ou 2) **caractérisé en ce que** au moins un des coefficients de réflexion est mesuré avec une onde incidente longitudinale.

4. Procédé selon la revendication 3) **caractérisé en ce que**, pour au moins un coefficient de réflexion mesuré avec une onde longitudinale, le système d'équations décrivant le modèle de réflexion de l'onde s'écrit $M_L \, X_L = Y_L$ avec :

$$M_L = \begin{bmatrix} \cos(\theta_{rL}) & -\sin(\theta_{rT}) & \cos(\theta_{tL}) & -\sin(\theta_{tT}) \\ -\sin(\theta_{rL}) & -\cos(\theta_{rT}) & \sin(\theta_{tL}) & \cos(\theta_{tT}) \\ -(\lambda_1 + 2\mu_1\cos^2(\theta_{rL})) & \mu_1 \frac{c_{1L}}{c_{1T}}\sin(2\theta_{rT}) & \frac{c_{1L}}{c_{2L}}(\lambda_2 + 2\mu_2\cos^2(\theta_{tL})) & -\mu_2 \frac{c_{1L}}{c_{2T}}\sin(2\theta_{tT}) \\ \mu_1\sin(2\theta_{rL}) & \mu_1 \frac{c_{1L}}{c_{1T}}\cos(2\theta_{rT}) & \mu_2 \frac{c_{1L}}{c_{2L}}\sin(2\theta_{tL}) & \mu_2 \frac{c_{1L}}{c_{2T}}\cos(2\theta_{tT}) \end{bmatrix} ;$$

$$X_L = \begin{bmatrix} r_L \\ r_T \\ t_L \\ t_T \end{bmatrix} ; Y_L = \begin{bmatrix} \cos(\theta_i) \\ \sin(\theta_i) \\ \lambda_1 + 2\mu_1\cos^2(\theta_i) \\ \mu_1\sin(2\theta_i) \end{bmatrix} ;$$

avec dans $M_L$ et $Y_L$ : $c_{1L}$ est la célérité de l'onde longitudinale dans ledit solide de référence, $c_{1T}$ est la célérité de l'onde transversale dans ledit solide de référence, $c_{2L}$ est la célérité de l'onde longitudinale dans ledit milieu étudié, $c_{2T}$ est la célérité de l'onde transversale dans ledit milieu étudié ; $\lambda_1$ et $\mu_1$ sont respectivement le premier et second coefficient de Lamé dans ledit solide de référence, $\lambda_2$ et $\mu_2$ sont respectivement le premier et second coefficient de Lamé dans ledit milieu étudié ; l'angle $\theta_i$ est l'angle d'incidence de l'onde longitudinale incidente, $\theta_{rL}$ l'angle de réflexion de l'onde longitudinale réfléchie, $\theta_{rT}$ l'angle de réflexion de l'onde transversale réfléchie, $\theta_{tL}$ l'angle de transmission de l'onde longitudinale transmise et $\theta_{tT}$ l'angle de transmission de l'onde transversale transmise ; avec dans $X_L$ : $r_L$ et $t_L$ sont respectivement les coefficients de réflexion et de transmission de l'onde longitudinale incidente, $r_T$ et $t_T$ sont respectivement les coefficients de conversion en réflexion et en transmission de l'onde longitudinale en onde transversale.

5. Procédé selon la revendication 1) ou 2) **caractérisé en ce que**, au moins un des coefficients de réflexion, est mesuré avec une onde incidente transversale.

6. Procédé selon la revendication 5) **caractérisé en ce qu'**au moins un des coefficients de réflexion est mesuré avec une onde transversale dont les directions de vibration sont contenues dans un même plan normal à l'interface de réflexion.

7. Procédé selon la revendication 6) **caractérisé en ce que**, pour au moins un coefficient de réflexion mesuré, le système d'équations qui décrit la réflexion de l'onde s'écrit $M_T X_T = Y_T$ avec :

$$M_T = \begin{bmatrix} \cos(\psi_{rL}) & -\sin(\psi_{rT}) & \cos(\psi_{tL}) & -\sin(\psi_{tT}) \\ -\sin(\psi_{rL}) & -\cos(\psi_{rT}) & \sin(\psi_{tL}) & \cos(\psi_{tT}) \\ -\frac{c_{1T}}{c_{1L}}(\lambda_1 + \mu_1\cos^2(\psi_{rL})) & \mu_1\sin(2\psi_{rT}) & \frac{c_{1T}}{c_{2L}}(\lambda_2 + 2\mu_2\cos^2(\psi_{tL})) & -\mu_2\frac{c_{1T}}{c_{2T}}\sin(2\psi_{tT}) \\ \mu_1\frac{c_{1T}}{c_{1L}}\sin(2\psi_{rL}) & \mu_1\cos(2\psi_{rT}) & \mu_2\frac{c_{1T}}{c_{2L}}\sin(2\psi_{tL}) & \frac{c_{1T}}{c_{2T}}\cos(2\psi_{tT}) \end{bmatrix} ;$$

$$X_T = \begin{bmatrix} r_L \\ r_T \\ t_L \\ t_T \end{bmatrix} ; Y_T = \begin{bmatrix} -\sin(\psi_i) \\ \cos(\psi_i) \\ -\mu_1\sin(2\psi_i) \\ \mu_1\cos(2\psi_i) \end{bmatrix} ;$$

avec dans $M_T$ et $Y_T$ : $c_{1L}$ est la célérité de l'onde longitudinale dans ledit solide de référence, $c_{1T}$ est la célérité de l'onde transversale dans ledit solide de référence, $c_{2L}$ est la célérité de l'onde longitudinale dans ledit milieu étudié, $c_{2T}$ est la célérité de l'onde transversale dans ledit milieu étudié ; $\lambda_1$ et $\mu_1$, sont respectivement le premier et second coefficient de Lamé dans ledit solide de référence, $\lambda_2$ et $\mu_2$ sont respectivement le premier et second coefficient de Lamé dans ledit milieu étudié ; l'angle $\psi_i$ est l'angle d'incidence de l'onde incidente transversale, $\psi_{rL}$ l'angle de réflexion de l'onde longitudinale réfléchie, $\psi_{rT}$ l'angle de réflexion de l'onde transversale réfléchie, $\psi_{tL}$ l'angle de transmission de l'onde longitudinale transmise et $\psi_{tT}$ l'angle de transmission de l'onde transversale transmise ; avec dans $X_T$ : $r_L$ et $t_L$ sont respectivement les coefficients de conversion en réflexion et en transmission de l'onde transversale incidente en onde longitudinale, $r_T$ et $t_T$ sont respectivement les coefficients de réflexion et de transmission de l'onde transversale incidente.

8. Procédé selon l'une des revendications de 1) à 7) **caractérisé en ce que** le nombre entier n de coefficients de réflexion mesurés, et exploités avec les estimations de leurs incertitudes respectivement associées, est supérieur au nombre de propriétés mécaniques dont les valeurs sont recherchées pour ledit milieu étudié.

9. Procédé selon l'une des revendications de 1) à 8) **caractérisé en ce que** les mesures des coefficients de réflexion sont obtenues avec une sonde comportant une barrette multi-transducteurs permettant d'effectuer les mesures des coefficients de réflexion sous plusieurs angles d'incidence en ajustant les retards électroniques appliqués aux éléments transducteurs de la barrette.

**Patentansprüche**

1. Verfahren zur Bestimmung der Werte mechanischer Eigenschaften eines untersuchten Mediums (102), anfangs flüssig oder weich, darunter der Elastizitätsmodul E, der Schermodul $\mu$ im Falle eines Festkörpers oder die Viskosität $\eta$ im Falle eines Fluids und die Dichte p, das die folgenden aufeinanderfolgenden Schritte umfasst:

a) die Messungen von n verschiedenen Reflexionskoeffizienten $r_i$, wobei i eine ganze Zahl von 1 bis n ist, wobei jeder dieser n verschiedenen Reflexionskoeffizienten durch die Reflexion einer mechanischen Welle an einer ebenen Grenzfläche zwischen einem festen Referenzmaterial (101), dessen mechanische Eigenschaften bekannt sind, und dem untersuchten Medium unter einem bekannten Einfallswinkel $\theta_i$ gemessen wird;

b) die Schätzungen der n Unsicherheiten $\delta r_i$, die jeweils mit den n Werten der Messungen der verschiedenen Reflexionskoeffizienten $r_i$ des Schritts a) assoziiert sind, wobei die Wahl dieser Unsicherheiten insbesondere die mit den Messungen selbst verbundenen Fehler berücksichtigt, mit dem Ziel, mindestens einen Lösungswert für die gesuchten mechanischen Eigenschaften des untersuchten Mediums zu finden;

c) ein Verfahren zur Auswertung und koordinierten Verarbeitung, mittels eines Computers, der n Reflexionskoeffizienten $r_i$, die in Schritt a) gemessen wurden, assoziiert mit ihren jeweiligen Unsicherheitsintervallen $[r_i - \delta r_i; r_i + \delta r_i]$, die in Schritt b) geschätzt wurden, um die gesuchten mechanischen Eigenschaften des untersuchten Mediums zu erhalten, wobei das Verfahren die folgenden aufeinanderfolgenden Schritte umfasst:

c1) Auswahl und Speicherung von $N_{C2L}$ verschiedenen Werten $c_{2L,p}$, unter denen die Geschwindigkeit der Longitudinalwelle in dem untersuchten Medium gesucht wird, **gekennzeichnet durch** den Index p, wobei p eine ganze Zahl zwischen 1 und $N_{C2L}$ ist,

Auswahl und Speicherung von $N_{C2T}$ verschiedenen Werten $C_{2T,q}$, unter denen die Geschwindigkeit der Transversalwelle in dem untersuchten Medium gesucht wird, **gekennzeichnet durch** den Index q, wobei q eine ganze Zahl zwischen 1 und $N_{C2T}$ ist,

Auswahl und Speicherung von $N_\rho$ verschiedenen Werten $\rho_{2,k}$, unter denen die Dichte des untersuchten Mediums gesucht wird, **gekennzeichnet durch** den Index k, wobei k eine ganze Zahl zwischen 1 und $N_\rho$ ist;

c2) Konstruktion und Speicherung eines Tensors Res, der im vorliegenden Fall dreistufig ist, dessen Dimensionen die in Schritt c1) gewählten Werte $N_{C2L}$, $N_{C2T}$ und $N_\rho$ sind und in dem alle Koeffizienten $Res_{pqk}$ den booleschen Wert 1 haben;

c3) Berechnung und Speicherung von n Tensoren $R_{pqk}(m_i)$ der gleichen Dimensionen wie der Tensor Res, wobei $m_i$ die zur Messung des zugehörigen Reflexionskoeffizienten $r_i$ verwendeten Reflexionsbedingungen bezeichnet, d. h.: die Geschwindigkeiten der Longitudinal- und Transversalwellen in dem Referenzfestkörper, die Dichte des Referenzfestkörpers, der Einfallswinkel und die longitudinale oder transversale Natur der verwendeten einfallenden Welle; jeder Tensor $R_{pqk}(m_i)$ wird konstruiert, indem jedem seiner Indexkoeffizienten (p,q,k) der Wert zugewiesen wird, der für den Reflexionskoeffizienten $r_i$ der einfallenden Welle durch numerisches Lösen des Gleichungssystems berechnet wurde, welches das Verhalten einer Welle beschreibt, die unter schrägem Einfall auf eine ebene Grenzfläche zwischen dem festen Referenzmaterial und dem untersuchten Medium trifft; diese Lösung wird unter Verwendung der Werte durchgeführt, die den Reflexionsbedingungen $m_i$ und den in Schritt c1) gewählten Werten $c_{2L,p}$, $c_{2Tq}$, $\rho_{2,k}$ entsprechen;

c4) Setzen des booleschen Wertes jedes Koeffizienten $Res_{pqk}$ des Tensors Res auf Null, wenn einer der Indexkoeffizienten (p,q,k) der Tensoren $R_{pqk}(m_i)$ eine der Beziehungen nicht erfüllt:

$r_i - \delta r_i \leq R_{pqk}(m_i) \leq r_i + \delta r_i$, für i zwischen 1 und n;

c5) für den Fall, dass mindestens ein Koeffizient des Tensors Res den booleschen Wert 1 hat, sind die Wertetripel ($c_{2L,p}$, $c_{2T,q}$, $\rho_{2k}$), für die $Res_{pqk}=1$ gilt, jeweils die Werte der Geschwindigkeiten der Longitudinal- und Transversalwellen im untersuchten Medium und der Dichte des untersuchten Mediums, die zusammen zur Berechnung der Werte der gesuchten mechanischen Eigenschaften des untersuchten Mediums verwendet werden: die Viskosität $\eta$ bei einem flüssigen untersuchten Medium durch die Beziehung $\eta = \rho c_T^2/(2\omega)$ mit der Kreisfrequenz $\omega$, der Schermodul $\mu$ bei einem festen untersuchten Medium durch die Beziehung $\mu = \rho c_T^2$, die erste Lamé-Konstante $\lambda$ durch die Beziehung $\lambda = \rho(c_L^2 - c_T^2)$ und der Elastizitätsmodul E durch die Beziehung $E = (3\lambda + 2\mu)/(\lambda + \mu)$;

c6) für den Fall, dass kein Koeffizient des Tensors Res den booleschen Wert 1 hat, müssen die Werte der Zahlen $N_{C2L}$, $N_{C2T}$ und $N_\rho$ und die Werte der Unsicherheiten $\delta r_i$ groß genug gewählt werden, um die gesuchten Lösungen zu erhalten.

2. Verfahren nach Anspruch 1), **dadurch gekennzeichnet, dass** die verschiedenen Reflexionskoeffizienten $r_i$ jeweils unter den Reflexionsbedingungen $m_i$ gemessen werden, die sich zumindest von den Reflexionsbedingungen der anderen Reflexionskoeffizienten, oder von dem Einfallswinkel $\theta_i$ oder von der Natur, longitudinal oder transversal, der einfallenden akustischen Welle unterscheiden.

3. Verfahren nach Anspruch 1) oder 2), **dadurch gekennzeichnet, dass** mindestens einer der Reflexionskoeffizienten mit einer longitudinal einfallenden Welle gemessen wird.

4. Verfahren nach Anspruch 3), **dadurch gekennzeichnet, dass** für mindestens einen mit einer Longitudinalwelle gemessenen Reflexionskoeffizienten das Gleichungssystem, das das Reflexionsmodell der Welle beschreibt, $M_L$ $X_L = Y_L$ geschrieben wird mit:

$$M_L = \begin{bmatrix} \cos(\theta_{rL}) & -\sin(\theta_{rT}) & \cos(\theta_{tL}) & -\sin(\theta_{tT}) \\ -\sin(\theta_{rL}) & -\cos(\theta_{rT}) & \sin(\theta_{tL}) & \cos(\theta_{tT}) \\ -(\lambda_1 + 2\mu_1\cos^2(\theta_{rL})) & \mu_1\frac{c_{1L}}{c_{1T}}\sin(2\theta_{rT}) & \frac{c_{1L}}{c_{2L}}(\lambda_2 + 2\mu_2\cos^2(\theta_{tL})) & -\mu_2\frac{c_{1L}}{c_{2T}}\sin(2\theta_{tT}) \\ \mu_1\sin(2\theta_{rL}) & \mu_1\frac{c_{1L}}{c_{1T}}\cos(2\theta_{rT}) & \mu_2\frac{c_{1L}}{c_{2L}}\sin(2\theta_{tL}) & \mu_2\frac{c_{1L}}{c_{2T}}\cos(2\theta_{tT}) \end{bmatrix};$$

$$X_L = \begin{bmatrix} r_L \\ r_T \\ t_L \\ t_T \end{bmatrix}; Y_L = \begin{bmatrix} \cos(\theta_i) \\ \sin(\theta_i) \\ \lambda_1 + 2\mu_1\cos^2(\theta_i) \\ \mu_1\sin(2\theta_i) \end{bmatrix};$$

mit:

in $M_L$ und $Y_L$: $c_{1L}$ ist die Geschwindigkeit der Longitudinalwelle in dem festen Referenzmaterial, $c_{1T}$ ist die Geschwindigkeit der Transversalwelle in dem festen Referenzmaterial, $c_{2L}$ ist die Geschwindigkeit der Longitudinalwelle in dem untersuchten Medium, $c_{2T}$ ist die Geschwindigkeit der Transversalwelle in dem untersuchten Medium; $\lambda_1$ und $\mu_1$ sind die erste bzw. zweite Lamé-Konstante in dem festen Referenzmaterial, $\lambda_2$ und $\mu_2$ sind die erste bzw. zweite Lamé-Konstante in dem untersuchten Medium; der Winkel $\theta_i$ ist der Einfallswinkel der einfallenden Longitudinalwelle, $\theta_{rL}$ ist der Reflexionswinkel der reflektierten Longitudinalwelle, $\theta_{rT}$ ist der Reflexionswinkel der reflektierten Transversalwelle, $\theta_{tL}$ ist der Transmissionswinkel der transmittierten Longitudinalwelle und $\theta_{tT}$ ist der Transmissionswinkel der transmittierten Transversalwelle;
in $X_L$: $r_L$ und $t_L$ sind die Reflexions- bzw. Transmissionskoeffizienten der einfallenden Longitudinalwelle, $r_T$ und $t_T$ sind die Umwandlungskoeffizienten in Reflexion bzw. Transmission der Longitudinalwelle in die Transversalwelle.

5. Verfahren nach Anspruch 1) oder 2), **dadurch gekennzeichnet, dass** mindestens einer der Reflexionskoeffizienten mit einer transversal einfallenden Welle gemessen wird.

6. Verfahren nach Anspruch 5), **dadurch gekennzeichnet, dass** mindestens einer der Reflexionskoeffizienten mit einer Transversalwelle gemessen wird, deren Schwingungsrichtungen in derselben Ebene senkrecht zur Reflexionsgrenzfläche enthalten sind.

7. Verfahren nach Anspruch 6), **dadurch gekennzeichnet, dass** für mindestens einen gemessenen Reflexionskoeffizienten das Gleichungssystem, das die Reflexion der Welle beschreibt, $M_T X_T = Y_T$ geschrieben wird mit:

$$M_T = \begin{bmatrix} \cos(\psi_{rL}) & -\sin(\psi_{rT}) & \cos(\psi_{tL}) & -\sin(\psi_{tT}) \\ -\sin(\psi_{rL}) & -\cos(\psi_{rT}) & \sin(\psi_{tL}) & \cos(\psi_{tT}) \\ -\frac{c_{1T}}{c_{1L}}(\lambda_1 + \mu_1\cos^2(\psi_{rL})) & \mu_1\sin(2\psi_{rT}) & \frac{c_{1T}}{c_{2L}}(\lambda_2 + 2\mu_2\cos^2(\psi_{tL})) & -\mu_2\frac{c_{1T}}{c_{2T}}\sin(2\psi_{tT}) \\ \mu_1\frac{c_{1T}}{c_{1L}}\sin(2\psi_{rL}) & \mu_1\cos(2\psi_{rT}) & \mu_2\frac{c_{1T}}{c_{2L}}\sin(2\psi_{tL}) & \frac{c_{1T}}{c_{2T}}\cos(2\psi_{tT}) \end{bmatrix};$$

$$X_T = \begin{bmatrix} r_L \\ r_T \\ t_L \\ t_T \end{bmatrix} ; Y_T = \begin{bmatrix} -\sin(\psi_i) \\ \cos(\psi_i) \\ -\mu_1\sin(2\psi_i) \\ \mu_1\cos(2\psi_i) \end{bmatrix} ;$$

mit:

in $M_T$ und $Y_T$ : $c_{1L}$ ist die Geschwindigkeit der Longitudinalwelle in dem festen Referenzmaterial, $c_{1T}$ ist die Geschwindigkeit der Transversalwelle in dem festen Referenzmaterial, $c_{2L}$ ist die Geschwindigkeit der Longitudinalwelle in dem untersuchten Medium, $c_{2T}$ ist die Geschwindigkeit der Transversalwelle in dem untersuchten Medium; $\lambda_1$ und $\mu_1$ sind die erste bzw. zweite Lamé-Konstante in dem festen Referenzmaterial, $\lambda_2$ und $\mu_2$ sind die erste bzw. zweite Lamé-Konstante in dem untersuchten Medium; der Winkel $\psi_i$ ist der Einfallswinkel der einfallenden Transversalwelle, $\psi_{rL}$ ist der Reflexionswinkel der reflektierten Longitudinalwelle, $\psi_{rT}$ ist der Reflexionswinkel der reflektierten Transversalwelle, $\psi_{tL}$ ist der Transmissionswinkel der transmittierten Longitudinalwelle, und $\psi_{tT}$ ist der Transmissionswinkel der transmittierten Transversalwelle;
in $X_T$: $r_L$ und $t_L$ sind jeweils die Koeffizienten der Umwandlung in Reflexion bzw. Transmission der einfallenden Transversalwelle in eine Longitudinalwelle, $r_T$ und $t_T$ sind jeweils der Reflexions- bzw. Transmissionskoeffizient der einfallenden Transversalwelle.

8. Verfahren nach einem der Ansprüche 1) bis 7), **dadurch gekennzeichnet, dass** die ganzzahlige Anzahl n der gemessenen und mit den Abschätzungen ihrer jeweils zugehörigen Unsicherheiten ausgewerteten Reflexionskoeffizienten größer ist als die Anzahl der mechanischen Eigenschaften, deren Werte für das untersuchte Medium gesucht werden.

9. Verfahren nach einem der Ansprüche 1) bis 8), **dadurch gekennzeichnet, dass** die Messungen der Reflexionskoeffizienten mit einer Sonde durchgeführt werden, die ein Array aus mehreren Wandlern umfasst, das es ermöglicht, die Messungen der Reflexionskoeffizienten aus mehreren Einfallswinkeln durchzuführen, indem die an die Wandlerelemente des Arrays angelegten elektronischen Verzögerungen eingestellt werden.

**Claims**

1. Method for determining the mechanical property values of a medium under study (102) initially liquid or soft, including the Young's modulus E, the shear modulus $\mu$ in the case of a solid or the viscosity $\eta$ in the case of a fluid and the volumetric mass $\rho$, method which comprises the following successive steps:

a) measurements of n distinct reflection coefficients $r_i$, i being an integer from 1 to n, each of these n distinct reflection coefficients being measured by the reflection of a mechanical wave on a plane interface between a reference solid material (101) whose mechanical properties are known and the said medium under study at a known angle of incidence $\theta_i$ ;
b) the estimates of the n uncertainties $\delta r_i$ associated respectively with the n values of the measurements of the distinct reflection coefficients $r_i$ of the step a), the choice of which takes into account in particular the errors linked to the measurements themselves, with the aim of finding at least one solution value for the mechanical properties sought of the said medium under study;
c) a method of exploitation and coordinated processing, by means of a computer, of the n reflection coefficients $r_i$ measured in step the a) associated with their respective uncertainty intervals $[r_i-\delta r_i; r_i+\delta r_i]$ estimated in the step b) to obtain the desired mechanical properties of the said medium under study, and which comprises the following successive steps:

c1) selecting and storing $N_{C2L}$ distinct values $c_{2L,p}$ among which the velocity of the longitudinal wave in said medium under study is sought, identified by the index p, p being an integer between 1 and $N_{C2L}$ ,
the choice and storage of $N_{C2T}$ distinct $c_{2T,q}$ values among which the velocity of the transverse wave in the said medium under study is sought, identified by the index q, q being an integer between 1 and $N_{C2T}$,
the choice and storage of $N_\rho$ distinct values $\rho_{2,k}$ among which the volumetric mass of the said medium under study is sought, identified by the index k, k being an integer between 1 and $N_\rho$;

c2) the construction and storage of a tensor Res which, in the case in point is of order 3, whose dimensions are the values $N_{C2L}$, $N_{C2T}$ and $N_\rho$ chosen in step c1) and whose $Res_{pqk}$ coefficients all have the Boolean value 1;

c3) the calculation and storage of n tensors $R_{pqk}(m_i)$ of the same dimensions as the tensor Res, where $m_i$ designates the reflection conditions used to measure the associated reflection coefficient $r_i$, i.e. : the longitudinal and transverse wave velocities in said reference solid material, the density of said reference solid material, the angle of incidence and the longitudinal or transverse nature of the incident wave used ; each tensor $R_{pqk}(m_i)$ is constructed by assigning to each of its coefficients of index (p,q,k) the value of the reflection coefficient $r_i$ of the incident wave calculated by the numerical resolution of the system of equations which describes the behaviour of a wave encountering, under oblique incidence, a plane interface between said reference solid material and said medium under study; this resolution is carried out using the values which correspond to the reflection conditions $m_i$ and the values $c_{2L,p}$, $c_{2T,q}$, $\rho_{2,k}$ chosen in step c1) ;

c4) setting to zero the Boolean value of each $Res_{pqk}$ coefficient of the tensor Res if one of coefficients of index (p,q,k) of the tensors $R_{pqk}(m_i)$ does not verify one of the relations :

$r_i - \delta r_i \leq R_{pqk}(m_i) \leq r_i + \delta r_i$, for i between 1 and n ;

c5) in the case at least one coefficient of the tensor Res has the Boolean value 1, the triplets of values ($c_{2L,p}$, $c_{2T,p}$, $\rho_{2k}$) for which $Res_{pqk}=1$ are respectively the values of the velocities of the longitudinal and transverse waves in the medium under study and the density of the medium under study which are used together to calculate the values of the desired mechanical properties of the medium under study: the viscosity in the case the medium under study is a liquid by the relation $\eta = \rho c_T^2/(2\omega)$ with $\omega$ the wave pulsation, the shear modulus in the case the medium under study is a solid by the relation $\mu = \rho\, c_T^2$, the first Lamé coefficient by the relation $\lambda = \rho(c_L^2 - c_T^2)$ and the Young's modulus E by the relation $E = (3\lambda + 2\mu)/(\lambda + \mu)$;

c6) in the case no coefficient of the tensor Res has the Boolean value 1, the values of the numbers $N_{C2L}$, $N_{C2T}$ and $N_\rho$, and the values of the uncertainties $\delta r_i$ must be taken large enough to obtain the solutions sought.

2. The method according to claim 1) **characterized in that** the distinct reflection coefficients $r_i$ are each measured under reflection conditions $m_i$ which differ from the reflection conditions of the other reflection coefficients, at least, or from said angle of incidence $\theta_i$, or from the nature, longitudinal or transverse, of the incident acoustic wave.

3. The method according to claim 1) or 2) **characterized in that** at least one of the reflection coefficients is measured with a longitudinal incident wave.

4. The method according to claim 3) **characterized in that**, for at least one reflection coefficient measured with a longitudinal wave, the system of equations describing the reflection pattern of the wave is written $M_L X_L = Y_L$ with :

$$M_L = \begin{bmatrix} \cos(\theta_{rL}) & -\sin(\theta_{rT}) & \cos(\theta_{tL}) & -\sin(\theta_{tT}) \\ -\sin(\theta_{rL}) & -\cos(\theta_{rT}) & \sin(\theta_{tL}) & \cos(\theta_{tT}) \\ -(\lambda_1 + 2\mu_1\cos^2(\theta_{rL})) & \mu_1\frac{c_{1L}}{c_{1T}}\sin(2\theta_{rT}) & \frac{c_{1L}}{c_{2L}}(\lambda_2 + 2\mu_2\cos^2(\theta_{tL})) & -\mu_2\frac{c_{1L}}{c_{2T}}\sin(2\theta_{tT}) \\ \mu_1\sin(2\theta_{rL}) & \mu_1\frac{c_{1L}}{c_{1T}}\cos(2\theta_{rT}) & \mu_2\frac{c_{1L}}{c_{2L}}\sin(2\theta_{tL}) & \mu_2\frac{c_{1L}}{c_{2T}}\cos(2\theta_{tT}) \end{bmatrix};$$

$$X_L = \begin{bmatrix} r_L \\ r_T \\ t_L \\ t_T \end{bmatrix}; Y_L = \begin{bmatrix} \cos(\theta_i) \\ \sin(\theta_i) \\ \lambda_1 + 2\mu_1\cos^2(\theta_i) \\ \mu_1\sin(2\theta_i) \end{bmatrix};$$

where in $M_L$ and $Y_L$ : $c_{1L}$ is the velocity of the longitudinal wave in said reference solid, $c_{1T}$ is the velocity of the transverse wave in said reference solid, $c_{2L}$ is the velocity of the longitudinal wave in said medium under study, $c_{2T}$ is the velocity of the transverse wave in said medium under study; $\lambda_1$ and $\mu_1$ are respectively the first and second Lamé coefficient in said reference solid, $\lambda_2$ and $\mu_2$ are respectively the first and second Lamé coefficient in said medium under study ; the angle $\theta_i$ is the angle of incidence of the incident longitudinal wave, $\theta_{rL}$ is the angle of reflection of the reflected longitudinal wave, $\theta_{rT}$ is the angle of reflection of the reflected transverse wave, $\theta_{tL}$ is the angle of transmission of the transmitted longitudinal wave and $\theta_{tT}$ is the angle of transmission of the transmitted transverse wave; with in $X_L$ : $r_L$ and $t_L$ are respectively the reflection and transmission coefficients of the incident longitudinal wave, $r_T$ and $t_T$ are respectively the coefficients of conversion into reflection and transmission of the longitudinal wave into a transverse wave.

5. The method according to claim 1) or 2) **characterized in that** at least one of the reflection coefficients is measured with a transverse incident wave.

6. The process according to claim 5) **characterized in that** at least one of the reflection coefficients is measured with a transverse wave whose directions of vibration are contained in a same plane normal to the reflection interface.

7. The method according to claim 6) **characterized in that**, for at least one measured reflection coefficient, the system of equations which describes the reflection of the wave is written $M_T\, X_T = Y_T$ with :

$$
M_T = \begin{bmatrix}
\cos(\psi_{rL}) & -\sin(\psi_{rT}) & \cos(\psi_{tL}) & -\sin(\psi_{tT}) \\[2mm]
-\sin(\psi_{rL}) & -\cos(\psi_{rT}) & \sin(\psi_{tL}) & \cos(\psi_{tT}) \\[2mm]
-\frac{c_{1T}}{c_{1L}}(\lambda_1 + \mu_1\cos^2(\psi_{rL})) & \mu_1\sin(2\psi_{rT}) & \frac{c_{1T}}{c_{2L}}(\lambda_2 + 2\mu_2\cos^2(\psi_{tL})) & -\mu_2\frac{c_{1T}}{c_{2T}}\sin(2\psi_{tT}) \\[2mm]
\mu_1\frac{c_{1T}}{c_{1L}}\sin(2\psi_{rL}) & \mu_1\cos(2\psi_{rT}) & \mu_2\frac{c_{1T}}{c_{2L}}\sin(2\psi_{tL}) & \frac{c_{1T}}{c_{2T}}\cos(2\psi_{tT})
\end{bmatrix} ;
$$

$$
X_T = \begin{bmatrix} r_L \\ r_T \\ t_L \\ t_T \end{bmatrix} ; Y_T = \begin{bmatrix} -\sin(\psi_i) \\ \cos(\psi_i) \\ -\mu_1\sin(2\psi_i) \\ \mu_1\cos(2\psi_i) \end{bmatrix} ;
$$

with in $M_T$ and $Y_T$ : $c_{1L}$ is the velocity of the longitudinal wave in said reference solid, $c_{1T}$ is the velocity of the transverse wave in said reference solid, $c_{2L}$ is the velocity of the longitudinal wave in said medium under study, $c_{2T}$ is the velocity of the transverse wave in said medium under study; $\lambda_1$ and $\mu_1$ are respectively the first and second Lamé coefficient in said reference solid, $\lambda_2$ and $\mu_2$ are respectively the first and second Lamé coefficient in said medium under study ; the angle $\psi_i$ is the angle of incidence of the incident transverse wave, $\psi_{rL}$ the angle of reflection of the reflected longitudinal wave, $\psi_{rT}$ the angle of reflection of the reflected transverse wave, $\psi_{tL}$ the angle of transmission of the transmitted longitudinal wave and $\psi_{tT}$ the angle of transmission of the transmitted transverse wave; where in $X_T$ : $r_L$ and $t_L$ are respectively the coefficients of conversion into reflection and transmission of the incident transverse wave into a longitudinal wave, $r_T$ and $t_T$ are respectively the coefficients of reflection and transmission of the incident transverse wave.

8. A method according to one of claims 1) to 7) **characterized in that** the integer number n of measured reflection coefficients, and exploited with the estimates of their respectively associated uncertainties, is greater than the number of mechanical properties whose values are sought for said medium under study.

9. A method according to one of claims 1) to 8) **characterized in that** the reflection coefficient measurements are obtained with a probe comprising a multi-transducer array enabling reflection coefficient measurements to be carried out at several angles of incidence by adjusting the electronic delays applied to the transducer elements of the array.

**FIG. 1**

**FIG. 2**

**FIG. 3**

**FIG. 4**

FIG. 5

FIG. 6

$$U_e = \sum_i u_{ei} \qquad\qquad U_r = \sum_i u_{ri}$$

FIG. 7

FIG. 8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5708191 A
- US 5886250 A
- US 6083181 A

**Littérature non-brevet citée dans la description**

- **A.J BARLOW ; G. HARRISON ; J. RICHTER ; H. SEGUIN ; J. LAMB.** Electrical method for the viscoelastic behaviour of liquid under cyclic shearing stress. *Lab. Pract.,* 1961, vol. 10, 86-801
- **L. BELKHEIRI.** Etude de l'évolution des caractéristiques ultrasonores dans les matériaux en cours de solidification. *Thèse de doctorat Université Denis Diderot Paris 7,* 1992
- **A. BOUMIZ.** Etude comparée des évolutions mécaniques et chimiques des pâtes de ciment et mortiers à très jeunes âges. *Thèse de doctorat Université Denis Diderot Paris 7,* 1995
- **G. CANNARD ; G. ORCEL ; J. PROST.** Le suivi de la prise des ciments par ultrasons. *Bull. Liaison. Labo. P. et Ch.,* 1990, vol. 168, 89-95
- **B. CROS ; J.Y. FERRANDIS.** Characterization of the cernent setting by acoustic near field. *Sensors and actuators B,* 1999, vol. 60, 200-207
- Caractérisation ultrasonore haute fréquence des propriétés viscoélastiques de milieux liquides. **Y. DE-BLOCK.** Thèse de Doctorat. université de Valenciennes, 1997
- **M. FINK.** L'imagerie ultrasonore. *Rev. Phys. Appl.,* 1983, vol. 18, 527-556
- Etude de la propagation des ondes ultrasonores dans les milieux hétérogènes et applications de l'imagerie en mode B au contrôle non destructif. **J. FROHLY.** Thèse de Doctorat d'Etat. Université de Valenciennes, 29 Avril 1983
- **V. GARNIER ; G. CORNELOUP ; J.M. SPRAUEL ; J.C. PERFUMO.** Setting time study of roller compacted concrete by spectral analysis of transmitted ultrasonics signals. *NDT&E international,* 1995, vol. 28, 15-22
- **G. M. GLOVER ; G. HALL ; A.J. MATHESON ; J.L. STRETTON.** A magnetostrictive instrument for measuring the viscoelacticity of liquids in the frequency range 20-100 kHz. *J. Phys. E,* 1968, vol. 1, 383-388
- Onde élastiques transverses horizontales émises par des transducteurs interdigités déposés sur des plaques minces de quartz. Application aux capteurs de viscosité et aux détecteurs de gaz. **M. HOUM-MADY.** Thèse de doctorat de 3ème cycle. université de Besançon, 1991
- **S. LABOURET ; J. FROHLY.** Ultrasound method for monitoring the rheologic properties of cernent. *Ultrasonics,* 1998, vol. 36 (1-5), 205-208
- **G.G. KNOTT.** Reflexion and refraction of elastic waves with sismological application. *Phil. Magazine S5,* vol. 48 (290), 64-97
- **T. NOMURA ; M. OKUHARA.** Frequency shifts of piezoelectric quartz crystals immersed in organic liquids. *Anal. Chim. Acta,* 1982, vol. 142, 281-284
- **W.P. MASON.** Measurement of the viscosity and shear elasticity by means of a torsionaly vibrating crystal. *Trans. Am. Soc. Mech. Eng.,* 1947, vol. 69, 359
- **W.P. MASON ; H.J. MCSKIMIN.** atténuation and scattering of hight frequency sound waves in metals and glasses. *J. Acoust. Soc. Am.,* 1947, vol. 19, 464-473
- **W.P MASON ; W.O. BAKER ; H.J. MCSKIMIN ; J.H. HEISS.** Measurement of shear elasticity of liquids at ultrasonics frequencies. *Phys. Rev.,* 1949, vol. 75, 936-946
- **H.J MCSKIMIN.** Measurement of dynamic shear viscosity and stiffness of viscous liquids by means of traveling torsional waves. *J. Acoust. Soc. Am.,* 1952, vol. 24, 355-365
- **OULD EHSSEIN, C. ; SERFATY, S. ; GRIESMAR, P. ; LE HUEROU, J.Y. ; MARTINEZ, L. ; CAPLAIN, E. ; WILKIE-CHANCELIER, N. ; GINDRE, M. ; GOUEDARD, G. ; FIGUIERE, P.** Kinetic study of silica gels by a new rheological ultrasonic investigation. *Ultrasonics,* 2006, vol. 44, 881-885
- **C. PRUGNE ; J. VAN EST ; B. CROS ; G. LÉVÊQUE ; J. ATTAL.** Measurement of the viscosity of liquids by near field acoustics. *Meas. Sci. Technol.,* 1998, vol. 9, 1894-1898

- **A. RICCO ; S.J. LARTIN.** Acoustic wave viscosity sensor. *Appl. Phys. Letter,* 1987, vol. 50, 1474-1476
- **C.M. SAYERS ; R.L GRENFELL.** Ultrasonic propagation through hydrating cement. *Ultrasonics,* 1993, vol. 31, 147-153
- **V.V. SHAH ; K. BALASUBRANAIAM.** Measuring newtonian viscosity from the phase of reflected ultrasonic shear waves. *Ultrasonics,* 2000, vol. 38, 922-927
- Immunodétection par résonateur à quartz. **L. TESSIER.** Thèse de doctorat. Université de Tours, 1993
- **K.TOZAKI ; M KIMURA ; N. KOMATSU ; S. ITOU.** An improved method to determine complex acoustic impedance using a piezoelectric resonator. *Jpn. J Appl. Phys.,* 1992, vol. 31, 2592-2597